# EUROPÄISCHE PATENTANMELDUNG

(11) **EP 1 980 434 A2**
(43) Veröffentlichungstag der Anmeldung: **15.10.2008**
(21) Anmeldenummer: 08103400.1
(22) Anmeldetag: 07.04.2008
(51) Int. Cl.: B60J 1/00

(54) **Fahrzeugscheibe**

(30) Priorität: 12.04.2007 DE 102007017241
(71) Anmelder: Robert Bosch GmbH, 70442 Stuttgart (DE)
(72) Erfinder: Wuerz-Wessel, Alexander, 70599 Stuttgart (DE); Schick, Jens, 71083 Herrenberg (DE)

(57) **Zusammenfassung**

Die Erfindung betrifft eine Fahrzeugscheibe (2), insbesondere Frontscheibe, die einen Scheibenkörper (6) aufweist. Erfindungsgemäß ist vorgesehen, dass an der Rückseite (6b) und/oder Vorderseite (6a) des Scheibenkörpers (6) oder eines an dem Scheibenkörper angebrachten Gegenstandes in einem beschichteten Bereich (7) eine Antireflexbeschichtung (8) angebracht ist.. Vorteilhafterweise weist die Antireflexbeschichtung (8) in lateraler Richtung und/oder in Tiefenrichtung eine Strukturierung (10, 12) in Materialbereiche (10a, 12a) und materialfreie Bereiche (10b, 12b), z. B. Luftbereiche (10b, 12b), mit Abständen (l, d) unterhalb 750 nm, z. B. unterhalb 300nm auf. Die Strukturierung kann z. B. durch Prägung oder durch Ausbildung einer Porösität erreicht werden.

## Beschreibung

### Stand der Technik

Kameras zur Erfassung der Straßenszene vor dem Fahrzeug werden im allgemeinen im Fahrgastraum hinter der Frontscheibe angeordnet. Je nach Beleuchtungsverhältnissen spiegeln sich jedoch z. B. Teile des Armaturenbretts und ggf. weitere Gegenstände an der Innenseite der Frontscheibe. Dies kann zu Mustern im Bild führen, die ggf. für die Darstellung unerwünscht sind und für die weitere Bildverarbeitung hinderlich sein können, da z. B. Kanten- oder Eckendetektionsalgorithmen im Bild auch auf diese Muster ansprechen. Ein stehendes Muster im Bild kann daher eine Falschmessung, insbesondere ein falsches Erkennen eines relativ unbewegten Objektes im Erfassungsbereich vor dem Fahrzeug verursachen.

Um derartige Reflexionen zu vermeiden, werden derzeit aufwendig konstruierte und speziell beschichtete Streulichtblenden verwendet, die den Einfall des Streulichtes in das Kameraobjektiv verhindern sollen. Derartige Anordnungen sind jedoch relativ aufwendig und daher kostspielig.

Die JP 11240384 A zeigt eine Display-Anordnung für ein Fahrzeug, bei dem eine Kamera in einem Außenspiegel hinter einem halbdurchlässigen Spiegel angeordnet ist. Hierbei ist eine Antireflexbeschichtung auf der Rückseite des halbdurchlässigen Spiegels und ggf. an der Frontseite und Rückseite eines Vorderglases der CCD-Kamera vorgesehen. In Physik Journal 5 (2006) Nr. 5, Seite 48 ff. ist die Ausbildung mikrostrukturierter Antireflexbeschichtungen durch laterale Strukturierung oder poröse Beschichtungen beschrieben.

### Offenbarung der Erfindung

Erfindungsgemäß wird das Auftreten von Reflexionen durch eine Antireflexbeschichtung der Fahrzeugscheibe verhindert, die vorteilhafterweise in einem Bereich vor der Kamera angebracht ist, so dass sie Fahrzeugscheibe im relevanten Winkelbereich der Kamera bedeckt.

Der Erfindung liegt hierbei die Erkenntnis zu Grunde, dass die störenden Reflexionen auf überraschend einfache Weise durch eine Antireflexbeschichtung auf der Vorderseite und/oder Rückseite der Fahrzeugscheibe anstelle der herkömmlichen aufwendigen Streulichtblenden verhindert werden kann.

Erfindungsgemäß wird unter einer Antireflexbeschichtung eine Beschichtung verstanden, die eine vollständige oder auch teilweise Antireflexwirkung aufweist, z. B. auch eine Abschwächung der Reflexwirkung.

Als Antireflexbeschichtung können zum einen eine einzelne oder mehrere optische Schichten aufgebracht werden, die eine destruktive Interferenz bewirken, da anstelle des direkten Übergangs Luft/Glas nunmehr zwei beabstandete Grenzflächen Luft/Zwischenschicht und Zwischenschicht/Glas mit einem definierten Abstand auftreten. Hierbei kann z. B. eine Zwischenschicht mit nₛ = √*n*1*n*2, z. B. nₛ = 1,24 bei Fensterglas mit n2 = 1,55 und Luft mit n1 = 1, sowie einer optischen Dicke von λ/4 angebracht sein, was einer Vergütung des Glaskörpers entspricht.

Gemäß einer besonders bevorzugten Ausführungsform wird eine Beschichtung mit einer Strukturierung in Abständen bzw. Strukturierungsabständen unterhalb der Wellenlänge des Lichtes vorgenommen, wodurch ein sich kontinuierlich ändernder Brechungsindex erzeugt wird. Vorteilhafterweise wird hierbei eine submikro-strukturierte Antireflexbeschichtung bzw. nanostrukturierte Antireflexbeschichtung angebracht, da diese eine gute Entspiegelung auch für unterschiedliche Wellenlängen und Reflexwinkel ermöglicht.

Hierbei kann zum einen eine laterale Strukturierung erfolgen, indem der Glaskörper zunächst mit einer z. B. organischen Beschichtung versehen wird, die nachträglich durch Einprägen lateral strukturiert wird, wobei laterale Gitterperioden bzw. Abstände z. B. zwischen 200 und 300 nm verwendet werden können. Als lateral wird hierbei eine Strukturierung im wesentlichen parallel zur Oberfläche verstanden.

Alternativ oder ergänzend zu einer derartigen lateralen Strukturierung kann auch eine poröse Antireflexbeschichtung angebracht werden, in der sowohl lateral als auch in Tiefenrichtung (vertikal) eine Variation durch aufeinander folgende Materialbereiche und materialfreie Bereichen erfolgt.

Erfindungsgemäß kann somit eine relativ kostengünstige Maßnahme zur Verhinderung störender Reflexe angebracht werden, die zudem über einen hohen Wellenlängenbereich wirksam ist.

Erfindungsgemäß kann zum einen direkt der Glaskörper an seiner Vorder- und/oder Rückseite beschichtet werden. Weiterhin kann ein transparenter Gegenstand mit geeigneter (lateraler und/oder vertikaler) Strukturierung auf den Glaskörper angebracht, insbesondere mit einem transparenten Kleber aufgeklebt werden. Dieser Gegenstand kann insbesondere eine Folie sein.

### Kurze Beschreibung der Zeichnungen

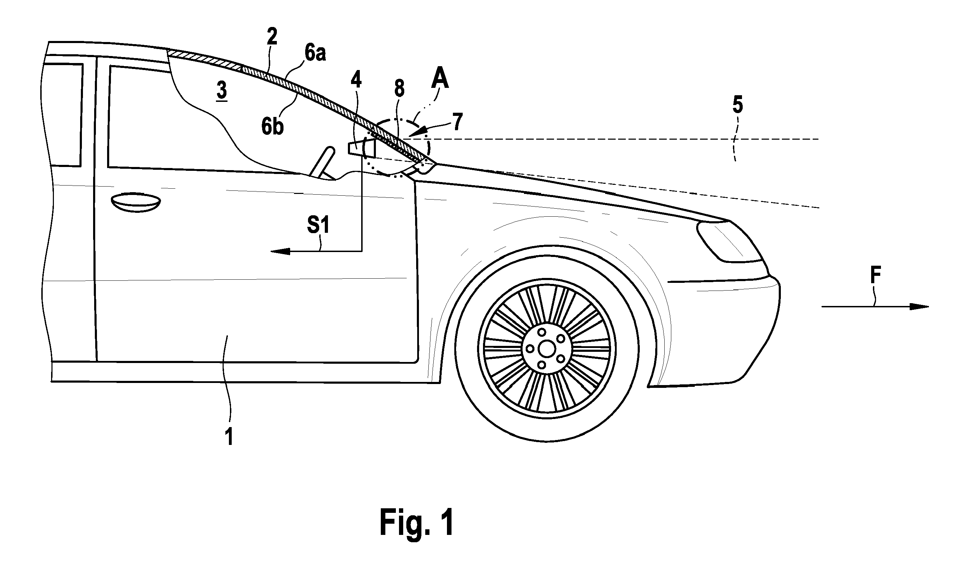

- Fig. 1: zeigt ein erfindungsgemäßes Fahrzeug mit einer erfindungsgemäßen Frontscheibe in Seitenansicht;
- Fig. 2: zeigt den Ausschnitt A aus Figur 1 als Querschnitt durch den beschichteten Bereich der Fahrzeugscheibe gemäß einer ersten Ausführungsform mit lateraler Strukturierung;
- Fig. 3: zeigt den Ausschnitt A aus Figur 1 als Querschnitt durch den beschichteten Bereich der Fahrzeugscheibe gemäß einer zweiten Ausführungsform mit poröser Strukturierung.

### Beschreibung der bevorzugten Ausführungsformen

Ein Fahrzeug 1 weist eine Frontscheibe 2 und (in Fahrtrichtung F) hinter der Frontscheibe 2, d. h. in seinem Innenraum (Fahrgastraum) 3 eine Kamera 4 auf, die in an sich bekannter Weise einen Kamera-Erfassungsbereich 5 vor dem Fahrzeug 1 erfasst und Bildsignale S1 zur internen Verwendung, insbesondere für eine weitere Bildverarbeitung, z. B. mit Kanten- oder Eckendetektionsalgorithmen ausgibt, wobei aus den Bildsignalen S1 Anweisungen für den Fahrer und/oder Eingriffe in die Fahrdynamik, einschließlich Bremseingriffe und Motoreingriffe, abgeleitet werden können.

Erfindungsgemäß weist die Frontscheibe 2 einen - vorzugsweise mehrschichtigen - Scheibenkörper 6 aus Verbundglas, z. B. als mehrschichtiges Lagensystem aus Glasschichten und Kunststofffolien auf, mit einer Vorderseite 6a und einer Rückseite 6b. Auf den genaueren Schichtaufbau des Scheibenkörpers 6 wird hier nicht weiter eingegangen, da er als solches bekannt ist.

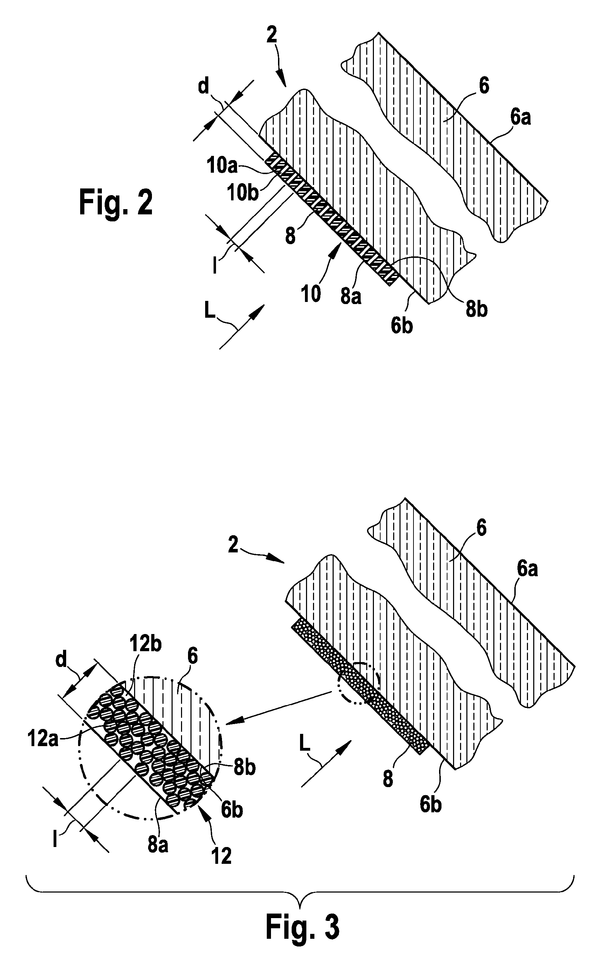

Erfindungsgemäß ist auf der Vorderseite 6a und/oder der Rückseite 6b des Scheibenkörpers 6 vor der Kamera 4 eine Antireflexbeschichtung 8 aufgebracht, die in Figur 2, 3 detaillierter dargestellt ist; hierbei sind die in Figur 2, 3 gezeigten Größendarstellungen der Dicken des Glaskörpers 6 sowie der Antireflexbeschichtung 8 nicht maßstabsgetreu. Die Antireflexbeschichtung 8 kann auf der Rückseite 6b (oder Vorderseite 6a) sowohl direkt als auch als Folie aufgebracht werden; weiterhin kann die Antireflexbeschichtung 8 auch auf einem transparenten Gegenstand, insbesondere einer Folie, ausgebildet und anschließend dieser Gegenstand auf der Rückseite 6b oder Vorderseite 6a angebracht werden. Die Fahrzeugscheibe 2 weist somit einen (direkt oder indirekt) beschichteten Bereich 7 auf, der sich gegebenenfalls auch über die ganze Fahrzeugscheibe 2 erstrecken kann.

Gemäß der Ausführungsformen der Fig. 2 weist die Antireflexbeschichtung 8 eine Strukturierung und/oder Porosität mit Strukturen 10 auf, die Abstände kleiner/gleich 500 nm, insbesondere im Bereich von 200 bis 300 nm aufweisen. Hierbei weisen die Strukturen 10 eine Dicke d (Tiefe) und laterale Abstände I jeweils im Bereich von 200 bis 300 nm auf. Licht L im optischen, sichtbaren Wellenlängenbereich mit λ = 380 bis 750 nm, das aus dem Fahrgastraum 3, z. b. vom Armaturenbrett oder von auf dem Armaturenbrett liegenden Gegenständen, auf die Frontscheibe 2 ausgestrahlt wird, erfährt somit eine Beugung an den Strukturen 10. Je kleiner das Verhältnis der Gitterperiode I bzw. lateralen Strukturierung 10 zur Wellenlänge λ, umso größer wird der Beugungswinkel und desto weniger gebeugte Ordnungen breiten sich aus, d.h. die Struktur hat eine reflexionsmindernde Wirkung.

Die Struktur 10 der Antireflexbeschichtung 8 weist hierbei Materialbereiche 10a und zwischen diesen ausgebildete, z. B. mit Luft gefüllte Zwischenbereiche 10b auf. Hierbei kann die Struktur 10 gemäß Fig. 2 regelmäßig sein, d. h. ein Beugungsgitter mit einer lateralen Gitterperiode I darstellen; dies ist erfindungsgemäß jedoch nicht erforderlich, da bei dieser Strukturierung unterhalb der Wellenlänge λ kein Beugungsphänomen erreicht wird.

Alternativ zu einer regelmäßigen Struktur kann gemäß Figur 3 eine poröse, unregelmäßige Schicht (Gel) 12 aus Körnern bzw. Kügelchen 12a mit luft- oder gasgefüllten Zwischenräumen 12b ausgebildet sein. Auch bei der Ausführungsform der Figur 3 bildet sich somit eine laterale Strukturierung I unterhalb der Wellenlänge λ; vorteilhafterweise bildet sich ergänzend eine Strukturierung in Richtung der Tiefe d mit Abständen unterhalb der Wellenlänge λ. Das Licht durchquert innerhalb der Wellenlänge λ somit mehrere Materialbereiche der Kügelchen 12a und materialfreie Bereiche der Zwischenräume 12b. Aufgrund der winzigen lateralen Strukturierungen I werden diese durch das von der Innenseite her einfallende Licht L nicht aufgelöst. Das Licht durchquert innerhalb seiner Wellenlänge λ somit eine Mischung aus Material und Luft, d. h. es erfährt einen sich kontinuierlich ändernden Brechungsindex, ohne dass eine direkte Reflexion an einer Grenzfläche stattfindet erfährt.

Vorteilhafterweise ist der Brechungsindex n, der sich in Fig. 3 oder auch in Fig. 2 durch die Mittelung entlang der Ausbreitungsrichtung des Lichtes L innerhalb einer Wellenlänge λ ergibt, im Bereich 1 < n < 1,3, so dass dieser Brechungsindex n einen Übergang zwischen Luft mit n = 1 und Glas n = 1,55 darstellt.

Hierbei kann sich - insbesondere bei der Ausführungsform der Fig. 3 - der gemittelte Brechungsindex n auch in Tiefenrichtung (vertikaler Richtung) innerhalb der Antireflexbeschichtung 8 ändern, d.h. von der Luft zum Glaskörper hin bzw. von der Außenseite 8b der Antireflexbeschichtung 8, mit der sie an Luft angrenzt, zu ihrer Innenseite 8a hin, allmählich zunehmen.

Die Herstellung der Struktur 10 der Figur 2 kann durch einen Prägeprozess erfolgen. Hierzu kann der Glaskörper 6 zunächst mit der Beschichtung aus z. B. einem organischen Copolymer beschichtet werden, die nachfolgend durch einen geeigneten Prägestempel geprägt wird. Der Prägestempel kann hierzu zunächst mit holografischen Strukturen hergestellt werden, z. B. unter Verwendung von zwei aufgeweiteten Laserstrahlen, die sich unter einem bestimmten Winkel überlagern und hierdurch ein geeignetes Interferenzmuster ausbilden, mit dem ein Fotolack belichtet wird. Weiterhin kann auch eine Belichtung des Lacks in mehreren Drehpositionen eines aufgeweiteten Laserstrahls erfolgen.

Die Herstellung der porösen Struktur 12 der Figur 3 ist als solche z. B. aus dem Bereich der Beschichtung von Solaranlagen bekannt. Hierzu kann eine transparente Oberfläche in eine Lösung (Sol) getaucht werden, die ein Lösungsmittel und bis zu 50 nm große SiO₂-Kügelchen 12a enthält. Der Scheibenkörper 6 wird nachfolgend aus der Lösung gezogen, das Lösungsmittel verdampft, wobei sich die SiO₂-Kügelchen 12a vernetzen, woraufhin eine Härtung bei Temperaturen um 500 °C unter Ausbildung der Zwischenräume 12b erfolgt.

## Patentansprüche

1. Fahrzeugscheibe (2), insbesondere Frontscheibe,
die einen Scheibenkörper (6) aufweist,
**dadurch gekennzeichnet, dass**
an der Rückseite (6b) und/oder der Vorderseite (6a) des Scheibenkörpers (6) oder eines an dem Scheibenkörper (6) angebrachten transparenten Gegenstandes in einem beschichteten Bereich (7) eine Antireflexbeschichtung (8) angebracht ist.

2. Fahrzeugscheibe nach Anspruch 1, **dadurch gekennzeichnet, dass** die Antireflexbeschichtung (8) in lateraler Richtung und/oder in Tiefenrichtung eine Strukturierung (10, 12) in Materialbereiche (10a, 12a) und materialfreie Bereiche (10b, 12b), z. B. Luftbereiche (10b, 12b), aufweist, die Abstände (l, d) unterhalb 750 nm aufweisen.

3. Fahrzeugscheibe nach Anspruch 2, **dadurch gekennzeichnet, dass** die lateralen Abstände (I, d) und/oder Tiefen-Abstände kleiner 500 nm, z. B. kleiner 300 nm sind.

4. Fahrzeugscheibe nach Anspruch 1 oder 2, **dadurch gekennzeichnet, dass** die Antireflexbeschichtung (8) eine laterale, eingeprägte Strukturierung (10) in Materialbereiche (10a) und materialfreie Bereiche (10b) aufweist.

5. Fahrzeugscheibe nach Anspruch 4, **dadurch gekennzeichnet, dass** die Antireflexbeschichtung (8) eine organische Schicht, z. B. Copolymer-Schicht, ist.

6. Fahrzeugscheibe nach Anspruch 1 oder 2, **dadurch gekennzeichnet, dass** die Antireflexbeschichtung (8) eine poröse Strukturierung (12) in lateraler Richtung und Tiefenrichtung aufweist, in der Materialbereiche (12a) miteinander verbunden sind und zwischen sich materialfreie, z. B. luftgefüllte, Bereiche (12b) aufweisen.

7. Fahrzeugscheibe nach Anspruch 6, **dadurch gekennzeichnet, dass** die poröse Struktur (12) durch Vernetzung, z. B. Sinterung oder Härtung von Körnern oder Kügelchen (12a), insbesondere aus einem keramischen Material, z. B. aus Si02, ausgebildet ist.

8. Fahrzeugscheibe nach einem der vorherigen Ansprüche, **dadurch gekennzeichnet, dass** die Antireflexbeschichtung (8) einen gemittelten Brechungsindex (n_{eff}) zwischen dem Brechungsindex (n) von Luft und dem Brechungsindex (n) des Scheibenkörpers (6) aufweist, z. B. mit einem Wert kleiner 1,3.

9. Fahrzeugscheibe nach einem der vorherigen Ansprüche, **dadurch gekennzeichnet, dass** der gemittelte Brechungsindex (n_{eff}) der Antireflexbeschichtung (8) von ihrer Außenseite (8b), mit der sie an Luft angrenzt, zu ihrer Innenseite (8a) hin, mit der sie am Scheibenkörper (6) angebracht ist, zunimmt.

10. Fahrzeugscheibe nach einem der vorherigen Ansprüche, **dadurch gekennzeichnet, dass** die Antireflexbeschichtung (8) direkt auf der Rückseite (6b) und/oder der Vorderseite (6a) des Scheibenkörpers (6) angebracht ist.

11. Fahrzeugscheibe nach einem der Ansprüche 1 bis 9, **dadurch gekennzeichnet, dass** die Antireflexbeschichtung auf einem an dem Scheibenkörper (6) angebrachten transparenten Gegenstand ausgebildet ist.

12. Fahrzeugscheibe nach Anspruch 11, **dadurch gekennzeichnet, dass** der Gegenstand eine flexible Folie ist.

13. Vorrichtung zur Erfassung einer Straßenszene vor einem Fahrzeug (1) umfassend eine Fahrzeugscheibe (2) nach einem der vorherigen Ansprüche und eine Kamera (4), wobei ein mit einer Antireflexbeschichtung (8) beschichteter Bereich (7) der Fahrzeugscheibe (2) in einem Erfassungsbereich (5) der Kamera (4) liegt.

14. Fahrzeug (1) mit einer Fahrzeugscheibe (2) nach einem der Ansprüche 1 bis 12 und einer in seinem Fahrgastraum (3) vorgesehenen Kamera (4), wobei der beschichtete Bereich (7) der Fahrzeugscheibe (2) in einem Erfassungsbereich (5) der Kamera (4) liegt.
